# EUROPEAN PATENT APPLICATION

(11) **EP 4 507 382 A1**
(43) Date of publication of application: **12.02.2025**
(21) Application number: 24192994.2
(22) Date of filing: 06.08.2024
(51) Int. Cl.: H04W 36/00, H04W 36/36

(54) **CONDITIONAL CELL CHANGE**

(30) Priority: 10.08.2023 IN 202341053794
(71) Applicant: Nokia Technologies Oy, 02610 Espoo (FI)
(72) Inventor: KARABULUT, Umur, Munich (DE); SELVAGANAPATHY, Srinivasan, Bangalore (IN); SPAPIS, Panagiotis, Munich (DE)
(74) Representative: Nokia EPO representatives

(57) **Abstract**

Example embodiments of the present disclosure relate to devices, methods, apparatuses and computer readable storage medium for conditional cell changes. In a method, a terminal device, receives, from a network device, a set of measurement configurations and execution conditions. The set of measurement configurations and execution conditions is associated with selective activation of a plurality of candidate cells. Then, the terminal device stores the set of measurement configurations and execution conditions and performs cell changes among the plurality of candidate cells based on the stored set of measurement configurations and execution conditions.

## Description

### FIELDS

Various example embodiments of the present disclosure generally relate to the field of telecommunication and in particular, to methods, devices, apparatuses and computer readable storage medium for conditional cell changes.

### BACKGROUND

Multi-radio access technology (RAT) Dual Connectivity (MR-DC) with selective activation of cell groups aims at enabling subsequent Conditional Primary Secondary Cell (PSCell) Change (CPC) or Conditional PSCell Addition (CPA) after Secondary Cell group (SCG) change, without reconfiguration and re-initialization on the CPC/CPA preparation from a network. This results in a reduction of the signaling overhead and interrupting time for SCG change.

### SUMMARY

According to some aspects, there is provided the subject matter of the independent claims. Some further aspects are defined in the dependent claims.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1A illustrates an example measurement configuration for conditional reconfigurations;
FIG. 1B illustrates an SCPAC preparation and measurement configurations over a new PSCell addition scenario.
FIG. 2 illustrates an example communication environment in which example embodiments of the present disclosure can be implemented;
FIG. 3 illustrates a signaling diagram for an example communication process in accordance with some example embodiments of the present disclosure;
FIG. 4 illustrates a flowchart of an example process of an SCPAC mobility scenario in accordance with some example embodiments of the present disclosure;
FIG. 5A and 5B illustrate alternative examples of SCPAS measurement configurations and conditions;
FIG. 6 illustrates a flowchart of a method implemented at a terminal device according to some example embodiments of the present disclosure;
FIG. 7 illustrates a flowchart of a method implemented at a network device according to some example embodiments of the present disclosure;
FIG. 8 illustrates a simplified block diagram of a device that is suitable for implementing example embodiments of the present disclosure; and
FIG. 9 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

Mechanisms and procedures of NR-DC with selective activation of the cell groups (at least for SCG) via Layer 3 (L3) enhancements are to be specified, and a subsequent cell group change after changing cell group without reconfiguration and re-initiation of CPC/CPA needs to be allowed.

Some baseline procedures to support a subsequent secondary cell group change include the following steps. Step 1: when the execution condition of a CPC candidate PScell is met, a UE performs the execution of CPC towards this candidate PScell. Step 2: After finishing the PSCell addition or change, the UE does not release conditional configuration of other candidate PSCells for a subsequent CPC, the UE continues evaluating the execution conditions of other candidate PScells. Step 3: When the execution condition of a candidate PScell is met, the UE performs the execution of CPC towards this candidate PSCell.

There are several scenarios of SCG selective activation may be assumed to be supported including secondary node (SN) initiated intra-SN SCG selective activation, master node (MN) initiated inter-SN SCG selective activation, and SN initiated inter-SN SCG selective activation.

For SN initiated inter-SN SCG selective activation, a source SN may generate the execution conditions for the initial CPC. For SN-initiated SCG selective activation, a candidate SN may generate execution conditions for subsequent CPC. Specific efforts for supporting nested configurations for candidate cell configuration will not be spent.

In NR-DC, the UE may receive two independent measurement configurations (for example, an information element (IE) measConfig) including a measConfig IE, associated with MCG which is included in the RRCReconfiguration message received via Signaling Radio Bearer (SRB)1 and a measConfig IE, associated with SCG, which is included in the RRCReconfiguration message received via SRB3, or alternatively, included within an SN RRCReconfiguration message embedded in an RRCReconfiguration message received via SRB 1. In this case, the UE maintains independent measurement variables (for example, VarMeasConfig IE and VarMeasReportList IE) associated with each measConfig IE received from each serving node.

The UE variable VarMeasConfig includes the accumulated configuration of the measurements to be performed by the UE, covering intra-frequency, inter-frequency and inter-RAT mobility related measurements. Information about VarMeasConfig UE variable is shown below.

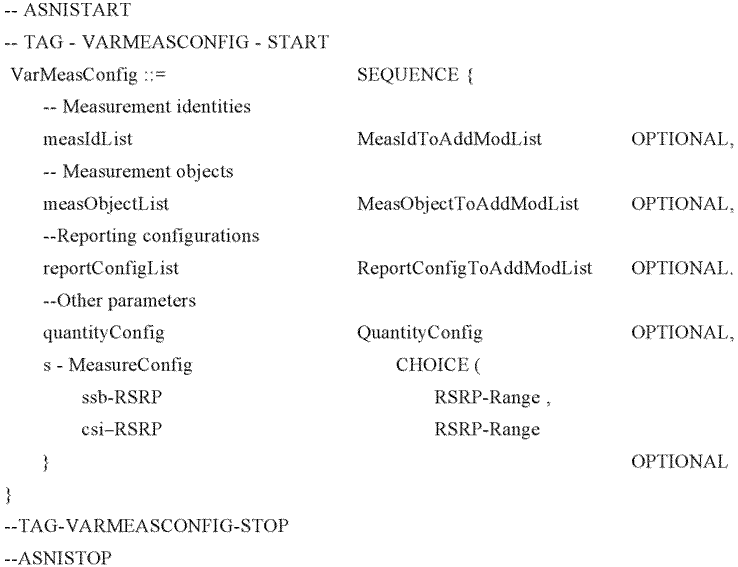

For measurement configuration for conditional Primary Cell (PCell)/PSCell changes, when the UE is configured with Conditional Handover (CHO) or Conditional PSCell Addition (CPA)/CPC, the serving cell will send a Radio Resource Control (RRC) reconfiguration (called as RRC1) to the UE. This RRC reconfiguration contains measurement configurations determined by the serving cell and also contains another RRC configuration (called as RRC2) which is target cell configuration (condRRCReconfing IE). In short, the serving cell RRC configuration will contain serving cell measurement configuration and RRC reconfiguration of the target cell.

The measurement configurations tell the UE what the UE should measure and which condition to evaluate, that is, measurement frequency, reference signals (RS), event type (for example, A3, A4, or A5), condition offsets, cell individual offsets (CIOs), time-to-trigger (TTT) and the like. Once the condition is met, the UE identifies the relevant RRC reconfiguration (for example, RRC2) and execute the handover towards the cell that was configured inside the RRC2.

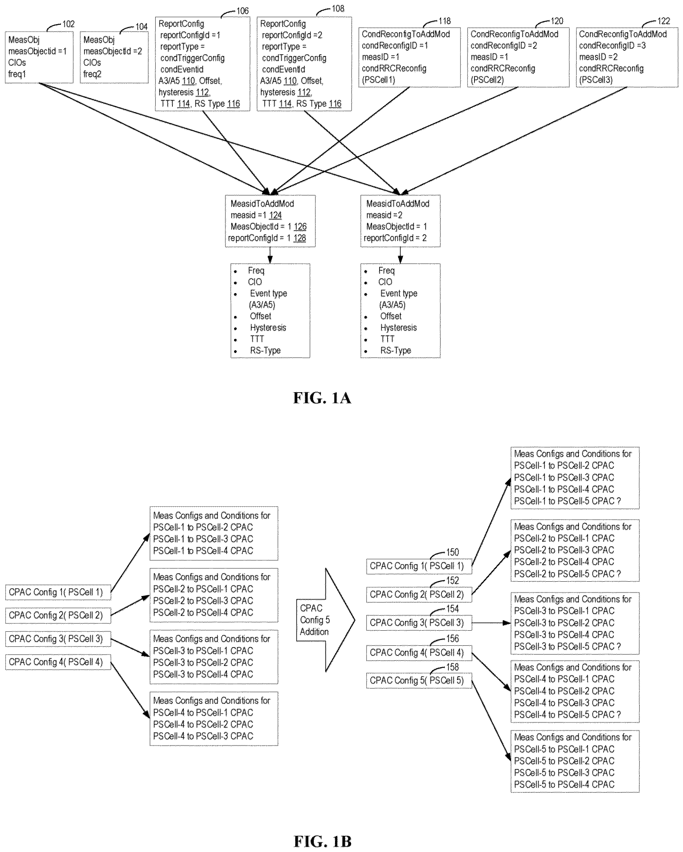

FIG. 1A illustrates an example measurement configuration for conditional reconfigurations. In this example, the UE may receive the following information from the serving cell in the RRC1.

The received information may include two measurement objects (for example, MeasObj 102 with measObjectID 1 and MeasObj 104 with measObjectID 2). Each object may refer to different frequencies and CIOs. The received information may include two conditions (for example, ReportConfig 106 with ReportConfigID 1 and ReportConfig 108 with ReportConfigID 2), and each ReportConfig defines type of the condition to be evaluated, that is, A3 or A5 110, hysteresis offset 112, TTT 114, RS Type 116 and event offset(s). In short, it specifies the condition and its parameters (for CHO or CPAC). The received information may include three preparations for three target cells (for example, CondReconfigToAddMod 118 with condReconfig ID 1, CondReconfigToAddMod 120 with condReconfig ID 2 and CondReconfigToAddMod 122 with condReconfig ID 3). In each, the condRRCReconfig is the target cell RRC (that is, RRC2). Each preparation is linked to an measID. The received information may also include the measIDToAddMod which links the measIDs to the MeasObj and ReportConfig. MeasID 1 124 is linked to measobjID 1 126 and reportConfigID 1 128, that is, the UE should evaluate the condition defined in reportconfig (with ID1), using the measurement configurations (for example, freq, CIOs) defined in MeasObj (with ID1).

When the UE is configured with the SN initiated inter-SN CPAC, the CPAC configurations, each CPAC configuration should include the measurement configuration for other CPAC configurations. For example, when the UE is served by PScell-1, the UE is configured with PSCell-2 and PSCell-3 CPACs as SCPAC. When the UE is served by PSCell-1, the UE will be configured by the serving cell for the measurement configurations and conditions to execute the SCPACs of PSCell-2 and PSCell-3. When the UE executes the PSCell-2 SCPAC configuration, the UE will be configured by the executed PSCell-2 SCPAC configuration for the measurement configurations and conditions to execute the SCPAC of PSCell-3 that is retained after PSCell-3 execution. In short, the PSCell-3 condition will be known by the UE as the PSCell-2 configuration includes that condition.

An issue raises in the case that, after an SCPAC preparation, when new SCPAC preparation addition is needed, the previous SCPAC configurations does not reflect the measurement configuration and CPAC configurations for the newly added SCPAC preparation. For example, if the PSCell-4 is prepared after PSCell-2 and PSCell-3 preparations, the measurement configurations and execution condition of PSCell-4 preparation does not exist in the PScell-2 and PScell-3 preparations.

Currently, the only way to include measurement configs and the conditions in the SCPAC configurations is to release and add them which may cause significant overhead in the signaling and UE processing. Referring to the same example, PSCell-2 and PSCell-3 preparation configurations should be released and added again to update the SCPAC preparation configuration such that it will reflect the measurement configuration and condition for PSCell-4 preparation. Such repreparation is an overkill solution and leads high signaling overhead.

It can be argued that the updated information on the preparations can be given to the UE so that the UE can update the preparation configurations. However, the UE is not obliged to decode the preparation configurations until the configuration is executed. Therefore, the UE cannot receive an update on the previous configuration for updating those configurations.

FIG. 1B illustrates an SCPAC preparation and measurement configurations over a new PSCell addition scenario.

As shown in FIG. 1B, on the right-hand side of the figure, 4 different SCPAC configurations are shown, that is, PSCell-1 SCPAC configuration 150, PSCell-2 SCPAC configuration 152, PSCell-3 SCPAC configuration 154 and PSCell-4 SCPAC configuration 156. Each configuration contains a measurement configuration and condition for other prepared cells. For example, the PSCell-1 SCPAC configuration 150 contains the measurement configuration and condition that is needed for PSCell-2 SCPAC handover. This is because, when the UE handovers to PSCell-1, the UE should evaluate the CPAC condition of PSCell-2, right after PSCell-1 is accessed.

The problem arises when a new PSCell is prepared after initial SCPAC preparation. In this example of FIG. 1B, PSCell-5 CPAC configuration 158 is given to the UE which contains the measurement configurations and conditions for all prepared cells. However, all previously prepared SCPAC configuration of PSCells lack the measurement configurations and condition for that newly prepared PSCell (marked with a question mark in each box).

Therefore, in SCPAC, a measurement configuration solution is needed such that when a new SCPAC preparation is added, the reconfiguration and re-initiation of previous configurations avoided; when a new SCPAC preparation is added, the UE should receive only update for the measurement configuration and conditions for newly added cell; the UE may start evaluation of the SCPAC condition of this newly added cell, right after executing of one of the previously prepared SCPAC config.

Aside from preparing a new cell for SCPAC, when one of the preparations is released, the previously prepared configurations cannot be updated because of the same reason described above. Consequently, the UE may perform unnecessary measurements after execution of one of the outdated CPAC configurations. In the worst case, if the add/release operations are repeated several times, the UE cannot be configured with a new SCPAC preparations due to limited number of condReconfigID IE and measID IE that are already used in the previous configurations and released where the measurement configurations inside each CPAC config still refer to those released configurations. Hence, to avoid any wrong referencing, the UE cannot be configured with new condRRCReconfig.

Example embodiments of the present disclosure propose a configuration maintenance scheme. With this scheme, a set of measurement configurations and execution conditions for cell changes among candidate cells is generated by a network device and transmitted to a terminal device. The set of measurement configurations and execution conditions is associated with selective activation of a plurality of candidate cells, so that the terminal device may store the set of measurement configurations and execution conditions. Based on the stored set of measurement configurations and execution conditions, the terminal device performs cell changes among candidate cells when needed.

In this way, the terminal device may have the measurement configurations and execution conditions for further cell changes among all the candidate cells which cany be used by the terminal device after a handover from a source cell to one of the candidate cell. Thus, the cell change may be implemented in a more efficient way, and the network performance may be improved.

It is to be noted that although the issue is originating from the SAPC scenario, the proposed scheme herein may be applied in general for a Master Cell group (MCG) selective activation scenario and other selective activation scenarios. In the following, some example embodiments will be described using the SAPC scenario as an example while the example embodiments herein can be applied in general for other selective activation scenarios.

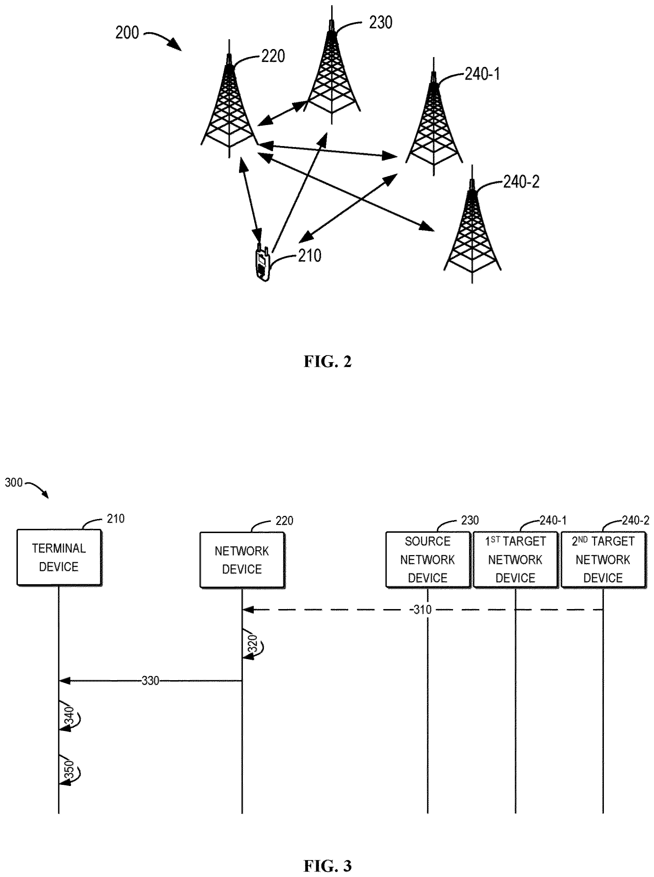

FIG. 2 illustrates an example communication environment 200 in which example embodiments of the present disclosure can be implemented.

The communication environment 200 comprises a terminal device 210 and four network devices which may include a network device 220, a source network device 230 and a plurality of target network devices including a first target network device 240-1 and a second target network device 240-2. In some example embodiments, in Secondary Cell group (SCG) selective activation, the network device 220 may operate as a MN, the source network device 230 may operate as a source SN, and the target network devices 240-1 and 240-2 may operate as target SNs (also called T-SNs). In MCG selective activation, the network device 220 may operate as a source MN, and other network devices may operate as target MNs.

It is to be understood that the number and types of devices are shown in FIG. 1 for the purpose of illustration without suggesting any limitation. For example, the communication environment 100 may comprise any numbers of target network devices. For the purpose of discussion, the target network devices will be individually or collectively referred to as target network device(s) 240.

In some example embodiments, a link from the network device 220 to the terminal device 210 is referred to as a downlink (DL), and a link from the terminal device 210 to the network device 220 is referred to as an uplink (UL). In DL, the network device 220 is a transmitting (TX) device (or a transmitter) and the terminal device 210 is a receiving (RX) device (or a receiver). In UL, the terminal device 210 is a TX device (or a transmitter) and the network device 220 is a RX device (or a receiver).

The terminal device 210 and the network devices 220, 230 and 240 can communicate with each other. Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

FIG. 3 illustrates a signaling diagram for an example communication process 300 among the terminal device 210, the network device 220, the source network device 230 and the target network device 240 according to some example embodiments of the present disclosure.

As shown in FIG. 3, the network device 220 may collect (310), from one or more further network devices (for example, the source network device 230, the first target network device 240-1 and the second target network device 240-2), measurement configurations and execution conditions for the cell changes related to respective candidate cells of the one or more further network devices. For example, the network device 220 may collect measurement configurations and execution conditions from all target SNs per Subsequent Conditional PSCell Addition/Change (SCPAC) request. The measurement configurations and execution conditions may be inside each SCPAC configuration in a transparent container, so that the network device 220 can read and understand the SCPAC configuration that each network device 230 or 240 configures for the terminal device 210.

The network device 220 generates (320) a set of measurement configurations and execution conditions for cell changes among a plurality of candidate cells for the terminal device 210. The set of measurement configurations and execution conditions is associated with selective activation of a plurality of candidate cells. For example, the generated set of measurement configurations and conditions can be used for execution of SCPAC configurations. In some example embodiments, the generation of the set of measurement configurations and execution conditions may be based on the collected measurement configurations and execution conditions. In some example embodiments, the set of measurement configurations and execution conditions may be generated per candidate cell.

In some example embodiments, the set of measurement configurations and execution conditions may comprise respective measurement configurations and respective lists of execution conditions for the plurality of candidate cells. In some example embodiments, the set of measurement configurations and execution conditions may comprise a common measurement configuration and respective lists of execution conditions for the plurality of candidate cells.

Then, the network device 220 transmits (330) the set of measurement configurations and execution conditions to the terminal device 210. Correspondingly, the terminal device 210 receives, from the network device 220, a set of measurement configurations and execution conditions for cell changes among a plurality of candidate cells. For example, the network device 220 may provide the set of measurement configurations and execution conditions as an SCPAC configuration to the terminal device 210. The SCPAC configuration may be provided explicitly with an indication, or implicitly with presence of a new IE in the configuration.

In some example embodiments, the terminal device 210 stores (340) the set of measurement configurations and execution conditions. For example, the set of measurement configurations and execution conditions may be stored by the terminal device 210 as SCPAC measurement configuration and condition set in an SCPACMeas UE variable.

In some example embodiments, the network device 220 may transmit the set of measurement configurations and execution conditions to the terminal device before handover from a source cell to a candidate cell of the plurality of candidate cells. By providing the measurement configurations and execution conditions for the candidate cells to the terminal device 210 before handover, the terminal device 210 may apply the measurement configurations and execution conditions of a candidate cell immediately after handover to this candidate cell. This enables the terminal device 210 to evaluate the handover conditions of subsequent cell changes, right after the handover, which is more efficient.

In some example embodiments, the network device 220 may transmit an update on the set of measurement configurations and execution conditions to the terminal device 210. Then, the terminal device 210 may update the stored set of measurement configurations and execution conditions based on the received update. In some example embodiments, the update may be transmitted from the network device 220 to the terminal device 210 in response to at least one of: addition of a further candidate cell to the plurality of candidate cells, release or removal of a candidate cell of the plurality of candidate cells, or replace of a candidate cell of the plurality candidate cells with a further candidate cell.

In some example embodiments, the terminal device 210 performs (350) the cell changes among the plurality of candidate cells based on the stored set of measurement configurations and execution conditions.

In some example embodiments, the network device 220 may transmit, to the terminal device 210, one or more preparation configurations for handover from a source cell to one or more target cells among the plurality of candidate cells. The network device 220 may transmit the set of measurement configurations and execution conditions outside (or independent) of the one or more preparation configurations. In this scheme, the SCPAC configurations may be updated without any reconfiguration of the whole SCPAC preparations upon configuration or addition of a new SCPAC cell.

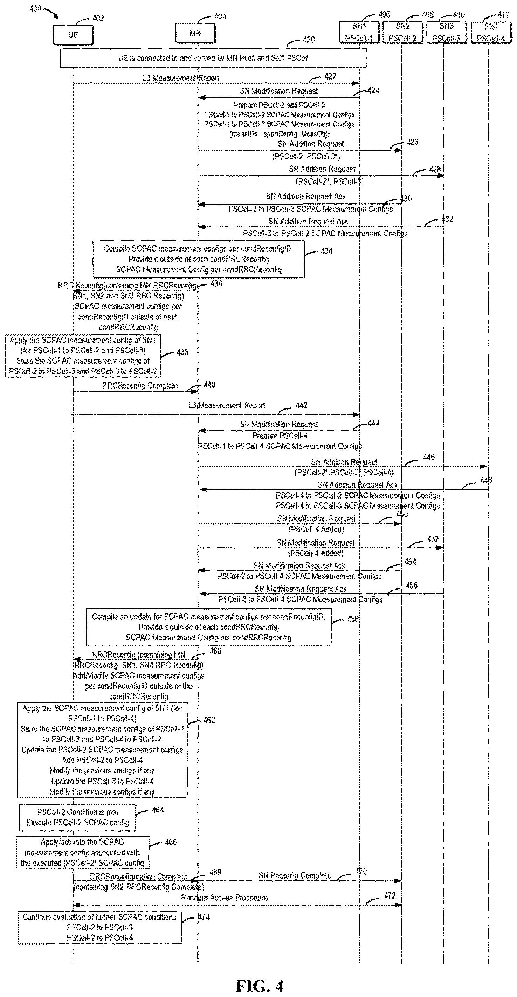

An example implementation of the present disclosure will be described in detail below with reference to FIG. 4. FIG. 4 illustrates a flowchart of an example process 400 of an SCPAC mobility scenario in accordance with some example embodiments of the present disclosure. In this example, a UE 402 operates as an example implementation of the terminal device 210 in FIG. 2, an MN 404 operates as an example implementation of the network device 220 in FIG. 2. An SN1 with PSCell-1 406 operates as an example implementation of the source network devices 230, and an SN2 with PSCell-2 408, an SN3 with PSCell-3 410 and an SN4 with PSCell-4 412 operate as example implementations of the target network devices 240.

In this scenario, the UE 402 may be initially configured with PSCell-2 and PSCell-3 SCPAC preparations. Then, the UE 402 may be configured with another SCPAC preparation, for example, PSCell-4 preparation.

As shown in FIG. 4, in the process 400, at 420, the UE 402 may be connected to and served by MN PCell and SN1 PSCell 406, therefore the UE 402 may be in dual connectivity.

At 422, the UE 404 may send an L3 measurement report to the SN1 406 that triggers the preparation of PSCell-2 408 and PScell-3 410 for SCPAC.

At 424, the SN1 406 may send the SN modification required message to the MN 404 to request the SCPAC preparation of the PSCell-2 408 and the PSCell-3 410. The SN1 408 may also send the measurement configurations and conditions that the UE needs for evaluation of the CPC conditions of the PSCell-2 408 and the PSCell-3 410 (in case the target SNs accept the preparations).

At 426, the MN 404 may send an SN addition request to the SN2 408 for SCPAC preparation of PSCell-2 408. The MN 404 may also indicate to the SN2 408 that the PSCell-3 of SN3 410 may also be prepared.

At 428, the MN 404 may send the SN addition request to the SN3 410 for SCPAC preparation of PSCell-3. The MN 404 may also indicate to the SN3 410 that the PSCell-2 of SN2 408 may also be prepared. In some example embodiments, 426 and 428 may be performed as parallel procedures.

At 430, the SN2 408 replies back with the SN addition request acknowledgement to the MN 404. The SN2 408 also provides the PSCell-2 SCPAC preparation configuration. The SN2 408 also provides the SCPAC measurement configurations and conditions for execution of the PSCell-3 SCPAC preparation (in case the UE 402 handovers to the PSCell-2 408, this will be used by the UE 402 to handover to the PSCell-3 410).

At 432, similar to the previous step, the SN3 410 may reply back to the MN 402 with PSCell-3 preparation along with the measurement configuration and conditions for the PScell-2 SCPAC preparations (for the preparation of the 430).

At 434, the MN 402 may receive SCPAC measurement configurations and conditions from a source SN and all target SNs for all SCPAC preparations. The MN 402 may use those configurations and conditions to generate an SCPAC measurement configuration and list of conditions.

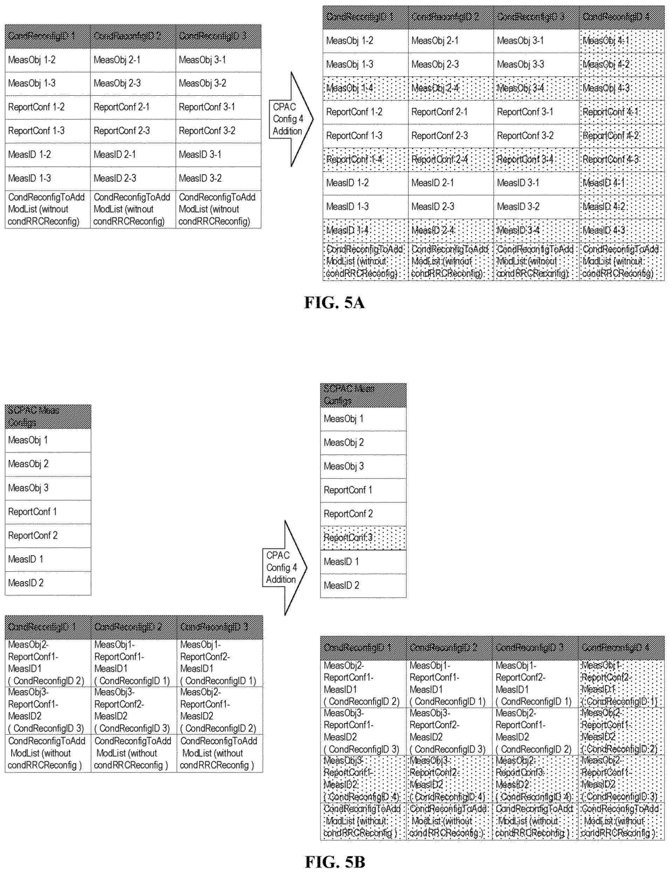

In some example embodiments, FIG. 5A illustrates an alternative example of SCPAS measurement configurations and conditions. The MN 402 may generate a measurement configuration for each prepared SCPAC. Besides, the MN 402 may generate the list of conditions for each prepared SCPAC. For example, there will be an SCPAC measurement configuration (for example, a list of MeasObj and ReportConfigs) and an execution condition that will be used by the UE 402 upon the UE 402 may execute the PSCell-2 408 preparation. Similarly, another SCPAC measurement configuration and execution condition may be provided to the UE 402 that the UE 402 may use it upon the UE access to the PSCell-3 410, so that the UE 402 will know what to measure and evaluate after accessing the PSCell-3 410.

In some example embodiments, FIG. 5B illustrates another alternative example of SCPAS measurement configurations and conditions. The MN 402 may generate a common measurement configuration for all prepared SCPACs. Hence, in case each SCPAC preparation shares common measobj or reportconfigs, the overhead in the configuration may be avoided. The SCPAC conditions may be same as the aforementioned alternative, for example, the UE 402 may receive a list of execution conditions per SCPAC preparation. In this example, the UE 402 may receive the execution condition of PSCell-3 to be used when the UE handovers to the PSCell-2 408. Similarly, the UE 402 may receive the execution condition of the PSCell-2 408 to be used when the UE 402 handovers to the PSCell-3 410. In this way, the signaling overhead may be further minimized as if the MN 404 can provide a configuration which will be a common list of configurations among the target SN configurations.

In some example embodiments, the UE 402 may also receive the SCPAC measurement configurations and conditions for handover from the PSCell-1 406 to the PSCell-2 408 and the PSCell-1 406 to the PSCell-3 410.

At 436, the MN 402 may provide the SCPAC preparation configurations of the PSCell-2 408 and the PSCell-3 410 to the UE 402 via an RRC Reconfiguration message. The MN 402 may also provide the SCPAC measurement configurations and conditions which may be generated by the MN 402 previously to the UE 402. The SCPAC measurement configurations and conditions may be provided to the UE 402 outside of the SCPAC preparation configurations so that those configurations may be modified/updated without decoding/updating the SCPAC preparation configurations.

At 438, the UE 402 may receive the MN RRC Reconfiguration and applie it to its current configuration. The UE 402 may store the SCPAC preparation configurations that are received in this message. The UE 402 may also store the SCPAC measurement configurations conditions. Those SCPAC measurement configurations and conditions may be stored in a UE variable, for example, an SCPACMeas UE variable. The UE 402 may apply the part of the SCPAC measurement configuration and conditions that are associated with the PSCell1 406 (current serving PSCell) and starts monitoring the SCPAC conditions for prepared PSCell-2 and PSCell-3.

At 440, the UE 402 may send the RRCReconfiguration complete message to the MN 404 to let the MN 404 know that the RRC Reconfiguration is successfully decoded and applied to the current configuration of the UE 402.

At 442, the UE 402 may send another L3 measurement report to indicate that the PSCell-4 412 is a good candidate for SCPAC preparation.

At 444, the SN1 406 may initiate the preparation of the PSCell-4 412 and send the SN modification required message. Herein, the SN1 406 may indicate the preparation of the PSCell-4 412. The SN1 406 may also send the measurement configuration and condition that are needed for handover from the PSCell-1 406 to the PSCell-4 412.

At 446, the MN 404 may send the SN addition request to the SN4 412 to ask for SCPAC preparation of the PSCell-4 412. The MN 404 may also indicate that the PSCell-2 408 and the PSCell-3 410 are SCPAC prepared cells.

At 448, the SN4 412 may reply back with the SN addition request acknowledgement to the MN 404. The SN4 412 may also provide the PSCell-4 SCPAC preparation configuration. The SN4 412 may also provide the SCPAC measurement configurations and conditions for execution of the PSCell-2 408 and PSCell-3 SCPAC preparation (in case the UE 402 handovers to the PSCell-4 412, this will be used by the UE 402 to handover to the PSCell-2 408 and the PSCell-3 410).

At 450-456, the MN 404 may contact the SNs of the previously prepared SCPAC PSCells (for example, the PSCell-2 408 and the PSCell-3 410). With this, the MN 404 may inform them about the newly added PSCell-4 SCPAC preparation and each SN provides PSCell-4 SCPAC condition along with the necessary measurement configurations.

At 458-460, similar to the aforementioned 434, the MN 404 may compile the SCPAC measurement configurations and conditions received from the SN4 412. The MN 404 may also include the updates on the SCPAC measurement configurations and conditions that are received from the SN2 408 and the SN3 410 (for PSCell-4 preparation). Then, the MN 404 may provide the SCPAC measurement configurations and conditions that are newly added to the previous SCPAC measurement configurations and conditions.

At 462, the UE 402 may update the SCPAC measurement configurations. It will add the SN4 measurement configurations and conditions to the common SCPAC measurement configurations and conditions. In addition to that, the UE 402 may update the SN1 406, the SN2 408 and the SN3 410 SCPAC measurement configurations and conditions that are received for the newly added PSCell-4 SCPAC preparation. The UE 402 may continue using the SN1 SCPAC measurement configuration with the updated version of the SCPACMeas UE variable. In this way, the UE 402 will always have up-to-date measurement configurations available that can be used immediately after each PSCell change.

At 464, the PSCell-2 406 may satisfy the SCPAC execution condition and the UE 402 may initiate the handover to the PSCell-2 408.

At 466, the UE 402 may apply/activate the SCPAC measurement configuration that is stored in the SCPAC measurement config and associated with the PSCell-2 408.

At 468-472, the UE 402 may complete the access to the target SN2 408.

At 474, the UE 402 may continue the evaluation of the PSCell-3 410, and PSCell-4 SCPAC conditions with updated measurement configurations and conditions. Since the measurement configurations and conditions that should be used upon execution of PSCell-2 SCPAC is updated at 462, the UE 402 may start evaluation of the PSCell-4 SCPAC condition immediately after accessing the PSCell-2 408.

In some example embodiments, in case any of the preparations was released/removed from the list of SCPAC preparations, the MN 404 would have also updated the SCPAC measurement configurations that are stored in the UE variable by instructing the UE 402 to remove the relevant measurement configurations and conditions defined for the retained SCPAC preparations because of the flexible architecture and framework. In this way, the UE 402 may be enabled to update the measurement configurations and conditions upon release or replace of a prepared SCPAC configuration.

The proposed scheme not only can be formulated over the SCG selective activation, that is, the UE 402 is connected to one MN 404 and handover between the PSCells of SN(s). However, this scheme may also be applicable for the MCG selective activation, that is, the UE 402 handovers between PCells of MN(s). In that case, the above scenario may assume that each SN is another MN and the measurement reports are always received by the source MN.

### Example Methods

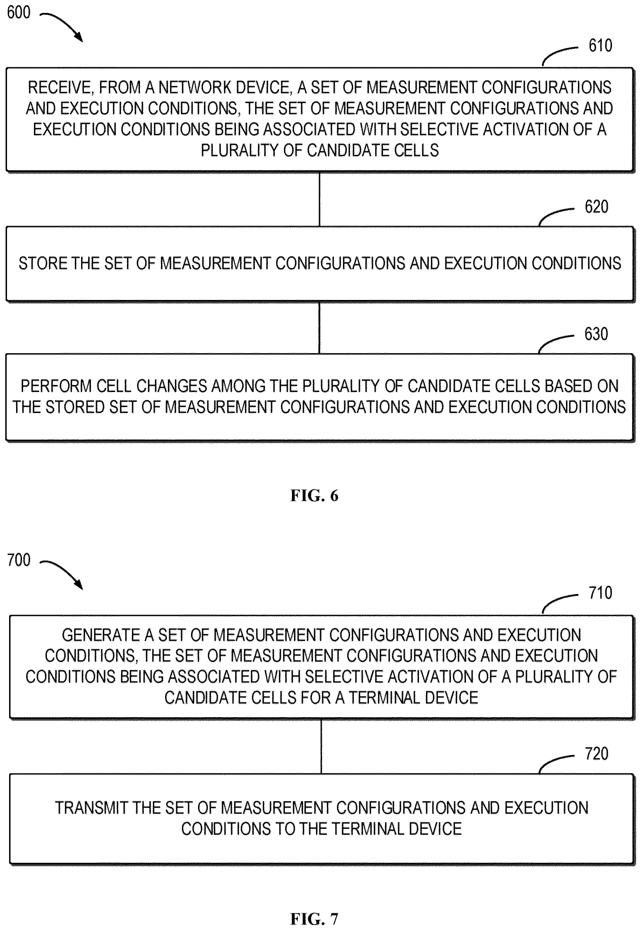

FIG. 6 shows a flowchart of an example method 600 implemented at the terminal device 210 in accordance with some example embodiments of the present disclosure. For the purpose of discussion, the method 600 will be described from the perspective of the terminal device 210 in FIG. 2.

At block 610, the terminal device 210 receives, from a network device, a set of measurement configurations and execution conditions, the set of measurement configurations and execution conditions being associated with selective activation of a plurality of candidate cells.

At block 620, the terminal device 210 stores the set of measurement configurations and execution conditions.

At block 630, the terminal device 210 performs cell changes among the plurality of candidate cells based on the stored set of measurement configurations and execution conditions.

In some example embodiments, the set of measurement configurations and execution conditions comprises respective measurement configurations and respective lists of execution conditions for the plurality of candidate cells.

In some example embodiments, the set of measurement configurations and execution conditions comprises a common measurement configuration and respective lists of execution conditions for the plurality of candidate cells.

In some example embodiments, the terminal device 210 receives the set of measurement configurations and execution conditions from the network device before handover from a source cell to a candidate cell of the plurality of candidate cells.

In some example embodiments, the terminal device 210 receives an update on the set of measurement configurations and execution conditions from the network device; and updates the stored set of measurement configurations and execution conditions based on the received update.

In some example embodiments, the terminal device 210 receives the update from the network device in response to at least one of: addition of a further candidate cell to the plurality of candidate cells, release or removal of a candidate cell of the plurality of candidate cells, or replace of a candidate cell of the plurality candidate cells with a further candidate cell.

In some example embodiments, the terminal device 210 receives, from the network device, one or more preparation configurations for handover from a source cell to one or more target cells among the plurality of candidate cells, wherein the set of measurement configurations and execution conditions is received from the network device outside of the one or more preparation configurations.

FIG. 7 shows a flowchart of an example method 700 implemented at the network device 220 in accordance with some example embodiments of the present disclosure. For the purpose of discussion, the method 700 will be described from the perspective of the network device 220 in FIG. 2.

At block 710, the network device 220 generates a set of measurement configurations and execution conditions, the set of measurement configurations and execution conditions being associated with selective activation of a plurality of candidate cells for a terminal device.

At block 720, the network device 220 transmits the set of measurement configurations and execution conditions to the terminal device.

In some example embodiments, the network device 220 collects, from one or more further network devices, measurement configurations and execution conditions associated with the selective activation of respective candidate cells of the one or more further network devices; and generates the set of measurement configurations and execution conditions based on the collected measurement configurations and execution conditions.

In some example embodiments, the network device 220 comprises a master node, and the one or more other network devices comprises a secondary node or a further master node.

In some example embodiments, the network device 220 generates the set of measurement configurations and execution conditions per candidate cell.

In some example embodiments, the set of measurement configurations and execution conditions comprises respective measurement configurations and respective lists of execution conditions for the plurality of candidate cells.

In some example embodiments, the set of measurement configurations and execution conditions comprises a common measurement configuration and respective lists of execution conditions for the plurality of candidate cells.

In some example embodiments, the network device 220 transmits the set of measurement configurations and execution conditions to the terminal device before handover from a source cell to a candidate cell of the plurality of candidate cells; and in response to accessing a candidate cell of the plurality of candidate cells, transmits, to the terminal device, the list of execution conditions for the candidate cell.

In some example embodiments, the network device 220 transmits an update on the set of measurement configurations and execution conditions to the terminal device.

In some example embodiments, the network device 220 transmits the update in response to at least one of: addition of a further candidate cell to the plurality of candidate cells, release or removal of a candidate cell of the plurality of candidate cells, or replace of a candidate cell of the plurality candidate cells with a further candidate cell.

In some example embodiments, the network device 220 transmits, to the terminal device, one or more preparation configurations for handover from a source cell to one or more target cells among the plurality of candidate cells, wherein the set of measurement configurations and execution conditions is transmitted to the terminal device outside of the one or more preparation configurations.

### Example Apparatus, Device and Medium

In some example embodiments, a first apparatus capable of performing any of the method 600 (for example, the terminal device 210 in FIG. 2 may comprise means for performing the respective operations of the method 600. The means may be implemented in any suitable form. For example, the means may be implemented in a circuitry or software module. The first apparatus may be implemented as or included in the terminal device 210 in FIG. 2.

In some example embodiments, the first apparatus comprises means for receiving, from a network device, a set of measurement configurations and execution conditions, the set of measurement configurations and execution conditions being associated with selective activation of a plurality of candidate cells; means for storing the set of measurement configurations and execution conditions; and means for performing cell changes among the plurality of candidate cells based on the stored set of measurement configurations and execution conditions.

In some example embodiments, the set of measurement configurations and execution conditions comprises respective measurement configurations and respective lists of execution conditions for the plurality of candidate cells.

In some example embodiments, the set of measurement configurations and execution conditions comprises a common measurement configuration and respective lists of execution conditions for the plurality of candidate cells.

In some example embodiments, the first apparatus comprises means for receiving the set of measurement configurations and execution conditions from the network device before handover from a source cell to a candidate cell of the plurality of candidate cells.

In some example embodiments, the first apparatus comprises means for receiving an update on the set of measurement configurations and execution conditions from the network device; and means for updating the stored set of measurement configurations and execution conditions based on the received update.

In some example embodiments, the first apparatus comprises means for receiving the update from the network device in response to at least one of: addition of a further candidate cell to the plurality of candidate cells, release or removal of a candidate cell of the plurality of candidate cells, or replace of a candidate cell of the plurality candidate cells with a further candidate cell.

In some example embodiments, the first apparatus comprises means for receiving, from the network device, one or more preparation configurations for handover from a source cell to one or more target cells among the plurality of candidate cells, wherein the set of measurement configurations and execution conditions is received from the network device outside of the one or more preparation configurations.

In some example embodiments, the first apparatus further comprises means for performing other operations in some example embodiments of the method 600 or the terminal device 210. In some example embodiments, the means comprises at least one processor; and at least one memory storing instructions that, when executed by the at least one processor, cause the performance of the first apparatus.

In some example embodiments, a second apparatus capable of performing any of the method 700 (for example, the network device 220 in FIG. 2 may comprise means for performing the respective operations of the method 700. The means may be implemented in any suitable form. For example, the means may be implemented in a circuitry or software module. The second apparatus may be implemented as or included in the network device 220 in FIG. 2.

In some example embodiments, the second apparatus comprises means for generating a set of measurement configurations and execution conditions, the set of measurement configurations and execution conditions being associated with selective activation of a plurality of candidate cells for a terminal device; and means for transmitting the set of measurement configurations and execution conditions to the terminal device.

In some example embodiments, the second apparatus comprises means for collecting, from one or more further network devices, measurement configurations and execution conditions associated with the selective activation of respective candidate cells of the one or more further network devices; and means for generating the set of measurement configurations and execution conditions based on the collected measurement configurations and execution conditions.

In some example embodiments, the network device comprises a master node, and the one or more other network devices comprises a secondary node or a further master node.

In some example embodiments, the second apparatus comprises means for generating the set of measurement configurations and execution conditions per candidate cell.

In some example embodiments, the set of measurement configurations and execution conditions comprises respective measurement configurations and respective lists of execution conditions for the plurality of candidate cells.

In some example embodiments, the set of measurement configurations and execution conditions comprises a common measurement configuration and respective lists of execution conditions for the plurality of candidate cells.

In some example embodiments, the second apparatus comprises means for transmitting the set of measurement configurations and execution conditions to the terminal device before handover from a source cell to a candidate cell of the plurality of candidate cells; and means for in response to accessing a candidate cell of the plurality of candidate cells, transmitting, to the terminal device, the list of execution conditions for the candidate cell.

In some example embodiments, the second apparatus comprises means for transmitting an update on the set of measurement configurations and execution conditions to the terminal device.

In some example embodiments, the second apparatus comprises means for transmitting the update in response to at least one of: addition of a further candidate cell to the plurality of candidate cells, release or removal of a candidate cell of the plurality of candidate cells, or replace of a candidate cell of the plurality candidate cells with a further candidate cell.

In some example embodiments, the second apparatus comprises means for transmitting, to the terminal device, one or more preparation configurations for handover from a source cell to one or more target cells among the plurality of candidate cells, wherein the set of measurement configurations and execution conditions is transmitted to the terminal device outside of the one or more preparation configurations.

In some example embodiments, the second apparatus further comprises means for performing other operations in some example embodiments of the method 700 or the network device 220. In some example embodiments, the means comprises at least one processor; and at least one memory storing instructions that, when executed by the at least one processor, cause the performance of the second apparatus.

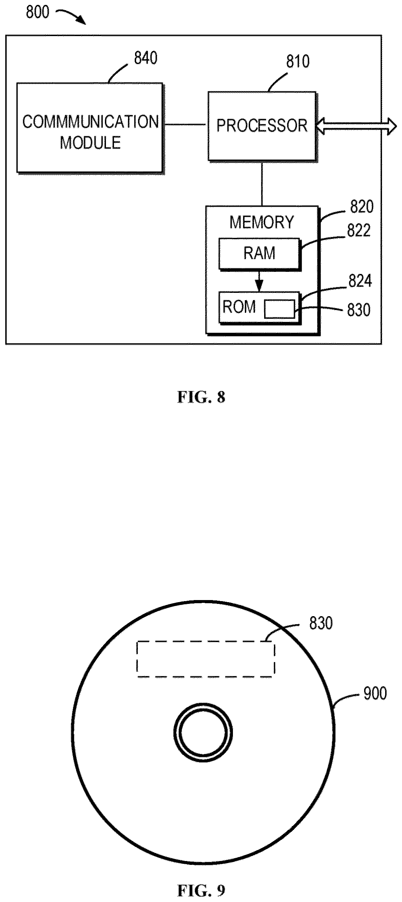

FIG. 8 is a simplified block diagram of a device 800 that is suitable for implementing example embodiments of the present disclosure. The device 800 may be provided to implement a communication device, for example, the terminal device 210 or the network device 220 as shown in FIG. 2. As shown, the device 800 includes one or more processors 810, one or more memories 820 coupled to the processor 810, and one or more communication modules 840 coupled to the processor 810.

The communication module 840 is for bidirectional communications. The communication module 840 has one or more communication interfaces to facilitate communication with one or more other modules or devices. The communication interfaces may represent any interface that is necessary for communication with other network elements. In some example embodiments, the communication module 840 may include at least one antenna.

The processor 810 may be of any type suitable to the local technical network and may include one or more of the following: general purpose computers, special purpose computers, microprocessors, digital signal processors (DSPs) and processors based on multicore processor architecture, as non-limiting examples. The device 800 may have multiple processors, such as an application specific integrated circuit chip that is slaved in time to a clock which synchronizes the main processor.

The memory 820 may include one or more non-volatile memories and one or more volatile memories. Examples of the non-volatile memories include, but are not limited to, a Read Only Memory (ROM) 824, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 822 and other volatile memories that will not last in the power-down duration.

A computer program 830 includes computer executable instructions that are executed by the associated processor 810. The instructions of the program 830 may include instructions for performing operations/acts of some example embodiments of the present disclosure. The program 830 may be stored in the memory, e.g., the ROM 824. The processor 810 may perform any suitable actions and processing by loading the program 830 into the RAM 822.

The example embodiments of the present disclosure may be implemented by means of the program 830 so that the device 800 may perform any process of the disclosure as discussed with reference to FIG. 3 to FIG. 7. The example embodiments of the present disclosure may also be implemented by hardware or by a combination of software and hardware.

In some example embodiments, the program 830 may be tangibly contained in a computer readable medium which may be included in the device 800 (such as in the memory 820) or other storage devices that are accessible by the device 800. The device 800 may load the program 830 from the computer readable medium to the RAM 822 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 9 shows an example of the computer readable medium 900 which may be in form of CD, DVD or other optical storage disk. The computer readable medium 900 has the program 830 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A terminal device comprising:
at least one processor; and
at least one memory storing instructions that, when executed by the at least one processor, cause the terminal device at least to:
receive, from a network device, a set of measurement configurations and execution conditions, the set of measurement configurations and execution conditions being associated with selective activation of a plurality of candidate cells;
store the set of measurement configurations and execution conditions; and
perform cell changes among the plurality of candidate cells based on the stored set of measurement configurations and execution conditions.

2. The terminal device of claim 1, wherein the set of measurement configurations and execution conditions comprises respective measurement configurations and respective lists of execution conditions for the plurality of candidate cells.

3. The terminal device of claim 1, wherein the set of measurement configurations and execution conditions comprises a common measurement configuration and respective lists of execution conditions for the plurality of candidate cells.

4. The terminal device of any of claims 1-3, wherein the at least one memory and the at least one processor cause the terminal device to:
receive the set of measurement configurations and execution conditions from the network device before handover from a source cell to a candidate cell of the plurality of candidate cells.

5. The terminal device of any of claims 1-4, wherein the at least one memory and the at least one processor cause the terminal device to:
receive an update on the set of measurement configurations and execution conditions from the network device; and
update the stored set of measurement configurations and execution conditions based on the received update.

6. The terminal device of claim 5, wherein the at least one memory and the at least one processor cause the terminal device to:
receive the update from the network device in response to at least one of:
addition of a further candidate cell to the plurality of candidate cells,
release or removal of a candidate cell of the plurality of candidate cells, or
replace of a candidate cell of the plurality candidate cells with a further candidate cell.

7. The terminal device of any of claims 1-6, wherein the at least one memory and the at least one processor cause the terminal device to:
receive, from the network device, one or more preparation configurations for handover from a source cell to one or more target cells among the plurality of candidate cells,
wherein the set of measurement configurations and execution conditions is received from the network device outside of the one or more preparation configurations.

8. A network device comprising:
at least one processor; and
at least one memory storing instructions that, when executed by the at least one processor, cause the network device at least to:
generate a set of measurement configurations and execution conditions, the set of measurement configurations and execution conditions being associated with selective activation of a plurality of candidate cells for a terminal device; and
transmit the set of measurement configurations and execution conditions to the terminal device.

9. The network device of claim 8, wherein the at least one memory and the at least one processor cause the network device to:
collect, from one or more further network devices, measurement configurations and execution conditions associated with the selective activation of respective candidate cells of the one or more further network devices; and
generate the set of measurement configurations and execution conditions based on the collected measurement configurations and execution conditions.

10. The network device of claim 9, wherein the network device comprises a master node, and the one or more other network devices comprises a secondary node or a further master node.

11. The network device of any of claims 8-10, wherein the at least one memory and the at least one processor cause the network device to:
generate the set of measurement configurations and execution conditions per candidate cell.

12. The network device of claim 11, wherein the set of measurement configurations and execution conditions comprises respective measurement configurations and respective lists of execution conditions for the plurality of candidate cells.

13. The network device of claim 11, wherein the set of measurement configurations and execution conditions comprises a common measurement configuration and respective lists of execution conditions for the plurality of candidate cells.

14. A method comprising:
receiving, from a network device, a set of measurement configurations and execution conditions, the set of measurement configurations and execution conditions being associated with selective activation of a plurality of candidate cells;
storing the set of measurement configurations and execution conditions; and
performing cell changes among the plurality of candidate cells based on the stored set of measurement configurations and execution conditions.

15. A method comprising:
generating a set of measurement configurations and execution conditions, the set of measurement configurations and execution conditions being associated with selective activation of a plurality of candidate cells for a terminal device; and
transmitting the set of measurement configurations and execution conditions to the terminal device.
